# EUROPEAN PATENT APPLICATION

(11) **EP 4 227 338 A1**
(43) Date of publication of application: **16.08.2023**
(21) Application number: 21880352.6
(22) Date of filing: 28.09.2021
(51) Int. Cl.: C08G 18/10, C08L 75/04, C08K 5/544

(54) **POLYURETHANE COMPOSITION**

(30) Priority: 12.10.2020 KR 20200131275
(71) Applicant: KCC Corporation, Seoul 06608 (KR)
(72) Inventor: LEE, Jeong Hyun, Ulsan 44262 (KR)
(74) Representative: Cabinet Laurent & Charras
(86) International application number: PCT/KR2021/013233
(87) International publication number: WO 2022/080704

(57) **Abstract**

The present invention relates to a polyurethane composition comprising a first urethane-based prepolymer, a second urethane-based prepolymer and an adhesion promoter, wherein the first urethane-based prepolymer is prepared from a first polyol compound and a first isocyanate compound, the second urethane-based prepolymer is prepared from a second polyol compound, a second isocyanate compound and a silane coupling agent, and the adhesion promoter is prepared from a biuret body of an isocyanate, and a silane compound containing an amine group.

## Description

### [Technical Field]

The present invention relates to a polyurethane composition for an adhesive, which has excellent adhesive property, suitable working life and thus excellent workability.

### [Background Art]

A conventional polyurethane resin has a urethane bond in its molecule, and has excellent abrasion resistance, oil resistance, and solvent resistance and thus is used in various fields such as an adhesive, an injection molding, ink, paint, and foam.

As a case where this polyurethane resin is used as an adhesive, there is a case where a substrate such as glass is bonded to the painted surface of an automobile body. Specifically, when bonding glass to the painted surface of a vehicle body, it is common to first apply a primer to the painted surface and/or glass, and then apply a polyurethane-based adhesive on the primer, in order to prevent the glass from being pushed or detached from the painted surface due to insufficient adhesive force between the painted surface and the glass. For this reason, when using a polyurethane-based adhesive, there was a problem that the process of bonding a substrate such as glass on the painted surface of an automobile body became complicated. In addition, there was a problem that the conventional polyurethane-based adhesive has a short working life and thus a poor workability, and the adhesive property at low temperature is also poor, and thus there are many restrictions on the conditions for the bonding process.

As an alternative to this, Korean Laid-open Patent Publication No. 2003-0057384 (Patent Document 1) discloses a polyurethane composition comprising the reaction product of a polyisocyanate having a biuret group and/or an isocyanurate group and a secondary aminoalkoxysilane in which an aromatic ring having a predetermined structure is directly bonded to a nitrogen atom. However, the composition disclosed in Patent Document 1 has insufficient adhesion properties to glass, and thus has a limitation in requiring primer treatment as described above.

Therefore, there is a need for research and development on a polyurethane composition for an adhesive, which has excellent adhesive property, suitable working life and thus excellent workability.

### [Disclosure]

### [Technical Problem]

Therefore, the present invention is to provide a polyurethane resin composition for an adhesive, which has excellent adhesive property, suitable working life and thus excellent workability.

### [Technical Solution]

The present invention provides a polyurethane composition comprising a first urethane-based prepolymer, a second urethane-based prepolymer and an adhesion promoter,

wherein the first urethane-based prepolymer is prepared from a first polyol compound and a first isocyanate compound,

the second urethane-based prepolymer is prepared from a second polyol compound, a second isocyanate compound and a silane coupling agent, and

wherein the adhesion promoter is prepared from a biuret body of an isocyanate and a silane compound containing an amine group.

### [Advantageous Effects]

When the polyurethane composition according to the present invention is used as an adhesive (sealant) for bonding a substrate such as glass to the painted surface of an automobile body, the primer pre-treatment process for the painted surface of the automobile body and/or glass surface can be omitted, and the economic efficiency is improved by omitting the primer coating film process as described above. In addition, the polyurethane composition has a suitable working life and thus an excellent workability, and is excellent in adhesion to the painted surface and ceramic glass surface.

### [Best Mode]

Hereinafter, the present invention will be described in detail.

In the present invention, a functional group value such as 'content of unreacted NCO (NCO%)' may be measured by a method well known in the art, and may be, for example, a value measured by titration.

The polyurethane resin composition according to the present invention comprises a first urethane-based prepolymer, a second urethane-based prepolymer, and an adhesion promoter.

### First urethane-based prepolymer

The first urethane-based prepolymer plays a role of controlling the mechanical properties of a cured product to be prepared and imparting flexibility.

The first urethane-based prepolymer may be directly synthesized according to a known method or may be a commercially available product. For example, the first urethane-based prepolymer may be prepared from a first polyol compound and a first isocyanate compound.

The first polyol compound may be polyalkylene polyol, acrylic polyol, polyester polyol and polycarbonate polyol, etc. Examples of the polyalkylene polyol comprise polyethylene glycol, polypropylene glycol, polytetramethylene glycol, polypropylene triol, poly(propylene glycol) diglycidyl ether, polypropylene glycol glycerol ether, etc.

In addition, the first polyol compound may have a weight average molecular weight (Mw) of 500 to 10,000 g/mol or 1,000 to 5,000 g/mol. If the weight average molecular weight of the first polyol compound is less than the above range, there may be a problem that the mechanical properties such as the shearing strength of the prepared coating film are inferior. If the weight average molecular weight of the first polyol compound exceeds the above range, there may be a problem that the storage stability of the composition is inferior.

The first isocyanate compound may be a compound containing two or more isocyanate groups, and may comprise, for example, at least one selected from the group consisting of 2,4-toluene diisocyanate(2,4-TDI), 2,6-toluene diisocyanate(2,6-TDI), 4,4'-diphenylmethylene diisocyanate(4,4'-MDI), 2,4'-diphenylmethylene diisocyanate(2,4'-MDI), 1,4-phenylene diisocyanate, 1,5-naphthalene diisocyanate, ethylene diisocyanate, propylene diisocyanate, tetramethylene diisocyanate, hexamethylene diisocyanate, isophorone diisocyanate, bis(4-isocyanatecyclohexyl)methane, 1-methyltrimethylene diisocyanate, 1,3-cyclopentene diisocyanate, 1,4-cyclopentene diisocyanate, 1,2-cyclopentene diisocyanate, 5-isocyanato-1-(isocyanatomethyl)-1,3,3-trimethyl-cyclohexane, triphenylmethane triisocyanate, tri(isocyanatophenyl) thiophosphate, 1,6,10-undecane triisocyanate and 1-isocyanato-4-[(4-isocyanatophenyl)methyl]benzene.

In order to control the viscosity of the composition and impart flexibility to the first urethane-based prepolymer, a first plasticizer may be additionally added to the first urethane-based prepolymer during the reaction between the first polyol compound and the first isocyanate compound. In this case, the first plasticizer is not particularly limited as long as it is a plasticizer commonly used for the urethane-based prepolymer, and may be, for example, dialkyl phthalate. Specifically, the first plasticizer may comprise at least one selected from the group consisting of dioctyl phthalate, dibutyl phthalate, dioctyl adipate, diisodecyl phthalate, diisononyl phthalate, and dipropylheptyl phthalate.

In addition, the first urethane-based prepolymer may be prepared from 100 parts by weight of the first polyol compound and 1 to 30 parts by weight of the first isocyanate compound. Specifically, the first urethane-based prepolymer may be prepared from 100 parts by weight of the first polyol compound, 10 to 20 parts by weight of the first isocyanate compound, and 20 to 50 parts by weight or 30 to 45 parts by weight of the first plasticizer.

If the content of the first polyol compound is less than the above range, there may be a problem that the shearing strength of the prepared coating film is lowered and the adhesion property is inferior. If the content of the first polyol compound exceeds the above range, there may be a problem that the storage stability and the working life of the composition are inferior. In addition, if the content of the first isocyanate compound is less than the above range, there may be a problem that the shearing strength of the prepared coating film is lowered or the adhesion property is inferior. If the content of the first isocyanate compound exceeds the above range, there may be a problem that the storage stability and the working life of the composition are inferior. In addition, if the content of the first plasticizer is less than the above range, there may be a problem that the workability and the storage stability of the composition are inferior. If the content of the first plasticizer exceeds the above range, there may be a problem that the workability of the composition is inferior.

The first urethane-based prepolymer may have a weight average molecular weight (Mw) of 3,000 to 15,000 g/mol or 5,000 to 10,000 g/mol. If the weight average molecular weight of the first urethane-based prepolymer is less than the above range, there may be a problem that the adhesion property is inferior. If the weight average molecular weight of the first urethane-based prepolymer exceeds the above range, there may be a problem that the storage stability and workability are inferior.

In addition, the first urethane-based prepolymer may have a viscosity of 5,000 to 15,000 cps or 7,000 to 11,000 cps at 20 °C. If the viscosity of the first urethane-based prepolymer at 20 °C is less than the above range, there may be a problem that the adhesion property is inferior. If the viscosity of the first urethane-based prepolymer exceeds the above range at 20 °C, there may be a problem that the storage stability and workability are inferior.

The first urethane-based prepolymer may have an unreacted NCO content (NCO%) of 1.60 to 1.80 % by weight or 1.70 to 1.75 % by weight based on the total weight of the prepolymer. If the NCO% of the first urethane-based prepolymer is less than the above range, there may be a problem that the storage stability and workability are inferior. If the NCO% of the first urethane-based prepolymer exceeds the above range, there may be a problem that the adhesion property is inferior.

In addition, the first urethane-based prepolymer may be comprised in the composition in an amount of 10 to 35 parts by weight or 15 to 30 parts by weight based on 20 to 40 parts by weight of the second urethane-based prepolymer. If the content of the first urethane-based prepolymer is less than the above range, there may be a problem that the mechanical properties such as the shearing strength are inferior. If the content of the first urethane-based prepolymer exceeds the above range, there may be a problem that the drying time is excessively increased.

### Second urethane-based prepolymer

The second urethane-based prepolymer plays a role of controlling the mechanical properties of the cured product to be prepared and imparting flexibility. When using the second urethane-based prepolymer together with the first urethane-based prepolymer, the isocyanate groups at each end of the first urethane-based prepolymer and the second urethane-based prepolymer are crosslinked with each other to form a strong urea bond, thereby improving the mechanical properties of the cured product, for example, the shearing strength.

The second urethane-based prepolymer can be prepared from a second polyol compound, a second isocyanate compound and a silane coupling agent, wherein the silane coupling agent modified at the end of the urethane-based prepolymer can improve the adhesive force of the cured product through a coupling reaction with the surface of a substrate such as glass, and it does not undergo reverse hydrolysis in water or chemicals (e.g., alcohols), thereby improving the water resistance and the chemical resistance of the cured product.

The second polyol compound may be polyalkylene polyol, acrylic polyol, polyester polyol and polycarbonate polyol. The polyalkylene polyol may include, for example, polyethylene glycol, polypropylene glycol, polytetramethylene glycol, polypropylene triol, poly(propylene glycol) diglycidyl ether, polypropylene glycol glycerol ether, etc.

In addition, the second polyol compound may have a weight average molecular weight (Mw) of 500 to 10,000 g/mol or 1,000 to 5,000 g/mol. If the weight average molecular weight of the second polyol compound is less than the above range, there may be a problem that the mechanical properties such as the shearing strength of the prepared coating film are inferior. If the weight average molecular weight of the second polyol compound exceeds the above range, there may be a problem that the storage stability of the composition is inferior.

The second isocyanate compound may be a compound containing two or more isocyanate groups, and may comprise, for example, at least one selected from the group consisting of 2,4-toluene diisocyanate(2,4-TDI), 2,6-toluene diisocyanate(2,6-TDI), 4,4'-diphenylmethylene diisocyanate(4,4'-MDI), 2,4'-diphenylmethylene diisocyanate(2,4'-MDI), 1,4-phenylene diisocyanate, 1,5-naphthalene diisocyanate, ethylene diisocyanate, propylene diisocyanate, tetramethylene diisocyanate, hexamethylene diisocyanate, isophorone diisocyanate, bis(4-isocyanatecyclohexyl)methane, 1-methyltrimethylene diisocyanate, 1,3-cyclopentene diisocyanate, 1,4-cyclopentene diisocyanate, 1,2-cyclopentene diisocyanate, 5-isocyanato-1-(isocyanatomethyl)-1,3,3-trimethyl-cyclohexane, triphenylmethane triisocyanate, tris(isocyanatephenyl) thiophosphate, 1,6,10-undecane triisocyanate and 1-isocyanato-4-[(4-isocyanatophenyl)methyl]benzene.

The silane coupling agent may comprise at least one selected from the group consisting of bis(trialkoxysilylpropyl)amine, N-2-(aminoethyl)-3-aminopropylmethyldimethoxy silane, N-2-(aminoethyl)-3-aminopropyltrimethoxy silane, 3-aminopropyltrimethoxy silane, 3-aminopropyltriethoxy silane and N-phenyl-3-aminopropyltrimethoxy silane. In this case, the bis (trialkoxysilylpropyl) amine may comprise at least one selected from the group consisting of bis(trimethoxysilylpropyl)amine, bis(triethoxysilylpropyl)amine, and bis(tripropoxysilylpropyl)amine.

In order to control the viscosity of the composition and impart flexibility to the second urethane-based prepolymer, a second plasticizer may be additionally added to the second urethane-based prepolymer during the reaction between the second polyol compound and the second isocyanate compound. In this case, the second plasticizer is not particularly limited as long as it is a plasticizer commonly used for the urethane-based prepolymer, and may be, for example, dialkyl phthalate. Specifically, the second plasticizer may comprise at least one selected from the group consisting of dioctyl phthalate, dibutyl phthalate, dioctyl adipate, diisodecyl phthalate, diisononyl phthalate, and dipropylheptyl phthalate.

In addition, the second urethane-based prepolymer may be prepared from 100 parts by weight of the second polyol compound, 1 to 30 parts by weight of the second isocyanate compound, and 0.1 to 10 parts by weight of a silane coupling agent. Specifically, the second urethane-based prepolymer may be prepared from 100 parts by weight of the second polyol compound, 10 to 20 parts by weight of the second isocyanate compound, 1 to 7 parts by weight of a silane coupling agent, and 20 to 50 parts by weight or 30 to 45 parts by weight of a second plasticizer.

If the content of the second polyol compound is less than the above range, there may be a problem that the shearing strength of the prepared coating film is lowered or the adhesion property is inferior. If the content of the second polyol compound exceeds the above range, there may be a problem that the storage stability and the working life of the composition are inferior. In addition, if the content of the second isocyanate compound is less than the above range, there may be a problem that the shearing strength of the prepared coating film is lowered or the adhesion property is inferior. If the content of the second isocyanate compound exceeds the above range, there may be a problem that the storage stability and the working life of the composition are inferior. In addition, if the content of the second plasticizer is less than the above range, there may be a problem that the workability and the storage stability of the composition are inferior. if the content of the second plasticizer exceeds the above range, there may be a problem that the workability of the composition is inferior.

The second urethane-based prepolymer may have a weight average molecular weight (Mw) of 1,000 to 15,000 g/mol or 5,000 to 10,000 g/mol. If the weight average molecular weight of the second urethane-based prepolymer is less than the above range, there may be a problem that the adhesion property is inferior. If the weight average molecular weight of the second urethane-based prepolymer exceeds the above range, there may be a problem that the storage stability and the workability are inferior.

In addition, the second urethane-based prepolymer may have a viscosity of 1,000 to 15,000 cps or 5,000 to 10,000 cps at 20 °C. If the viscosity of the second urethane-based prepolymer at 20 °C is less than the above range, there may be a problem that the adhesion property is inferior. If the viscosity of the second urethane-based prepolymer exceeds the above range at 20 °C, there may be a problem that the storage stability and workability are inferior.

The second urethane-based prepolymer may have an unreacted NCO content (NCO%) of 1.30 to 1.60 % by weight or 1.40 to 1.50 % by weight based on the total weight of the prepolymer. If the NCO% of the second urethane-based prepolymer is less than the above range, there may be a problem that the storage stability and workability are inferior. If the NCO% of the second urethane-based prepolymer exceeds the above range, there may be a problem that the adhesion property is inferior.

In addition, the second urethane-based prepolymer may be comprised in the composition in an amount of 20 to 40 parts by weight or 25 to 35 parts by weight based on 10 to 35 parts by weight of the first urethane-based prepolymer. If the content of the second urethane-based prepolymer is less than the above range, there may be a problem that the mechanical properties such as the shearing strength are inferior. If the content of the second urethane-based prepolymer exceeds the above range, there may be a problem that the drying time is excessively increased.

### Adhesion promoter

The adhesion promoter plays a role of improving the adhesive property of the composition, wherein the adhesion promoter contains a silane group and thus can improve the adhesive force of the cured product through a rapid coupling reaction with the surface of a substrate such as glass.

The adhesion promoter is prepared from a biuret body of an isocyanate and a silane compound containing an amine group.

The biuret body of the isocyanate may be represented by Formula 1 below. 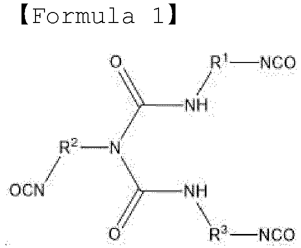 wherein,
R¹ to R³ are each independently an alkylene group having 1 to 10 carbon atoms, and
R¹ to R³ may be the same or different.

Specifically, R¹ to R³ may each independently be an alkylene group having 4 to 8 carbon atoms. In this case, the alkylene group may be linear or branched. In addition, the alkylene refers to a branched, straight-chain or cyclic divalent radical derived by removing one hydrogen atom from a carbon atom of an alkyl group. For example, the alkylene group may be, but is not limited to, methylene(-CH₂-), 1,1-ethylene(-CH(CH₃)-), 1,2-ethylene(-CH₂CH₂-), 1,1-propylene(-CH(CH2CH3)-), 1,2-propylene(-CH₂CH(CH₃)-), 1,3-propylene(-CH₂CH₂CH₂-), 1,4-butylene(-CH₂CH₂CH₂CH₂-), 2,4-butylene(-CH₂(CH₃)CH₂CH₂-), 1,6-hexylene(-CH₂CH₂CH₂CH₂CH₂CH₂-) and the like.

The silane compound containing an amine group may be a silane compound containing a secondary amine group and an alkoxy group. For example, the silane compound containing an amine group may comprise at least one selected from the group consisting of bis(trialkoxysilylalkylene)amine, N-phenyl-gamma-aminoalkylenetrialkoxy silane and 3-aminoalkylenetrialkoxy silane.

The "alkoxy" in each of the above components may have 1 to 5 carbon atoms or 1 to 3 carbon atoms, and examples thereof may be methoxy, ethoxy, propoxy, butoxy, and the like. In addition, the "alkylene" in each of the above components may have 1 to 5 carbon atoms or 2 to 4 carbon atoms and refers to a branched, straight-chain or cyclic divalent radical derived by removing one hydrogen atom from a carbon atom of an alkyl group. For example, the alkylene may be, but is not limited to, methylene(-CH₂-), 1,1-ethylene(-CH(CH₃)-), 1,2-ethylene(-CH₂CH₂-), 1,1-propylene(-CH(CH2CH3)-), 1,2-propylene(-CH₂CH(CH₃)-), 1,3-propylene(-CH₂CH₂CH₂-), 1,4-butylene(-CH₂CH₂CH₂CH₂-), 2,4-butylene(-CH₂(CH₃)CH₂CH₂-) and the like. In this case, the alkylene and alkoxy groups may be linear or branched.

The adhesion promoter may be prepared from 100 parts by weight of a biuret body of an isocyanate and 10 to 190 parts by weight or 15 to 180 parts by weight of a silane compound containing an amine group. If the content of the biuret body of the isocyanate is less than the above range, there may be a problem that the adhesion property with the resin is inferior. If the content of the biuret body of the isocyanate exceeds the above range, there may be a problem that the storage stability is inferior. In addition, if the content of the silane compound containing an amine group is less than the above range, there may be a problem that the adhesion property with the resin is inferior. If the content of the silane compound containing an amine group exceeds the above range, there may be a problem that the internal curing is slowed down.

In order to control the viscosity of the composition and impart flexibility to the adhesion promoter, a third plasticizer may be additionally added to the adhesion promoter during the reaction of the biuret body of the isocyanate and the silane compound containing an amine group. In this case, the third plasticizer is not particularly limited as long as it is a plasticizer commonly used for the paint composition, and may be, for example, dialkyl phthalate. Specifically, the third plasticizer may comprise at least one selected from the group consisting of dioctyl phthalate, dibutyl phthalate, dioctyl adipate, diisodecyl phthalate, diisononyl phthalate, and dipropylheptyl phthalate.

For example, the adhesion promoter may be prepared from 100 parts by weight of the biuret body of the isocyanate, 15 to 180 parts by weight or 20 to 175 parts by weight of the silane compound containing an amine group, and 10 to 80 parts by weight or 30 to 50 parts by weight of the third plasticizer. If the content of the third plasticizer is less than the above range, there may be a problem that the workability and the storage stability of the composition are lowered. If the content of the third plasticizer exceeds the above range, there may be a problem that the workability of the composition is lowered.

The adhesion promoter may have an unreacted NCO content (NCO%) of 2.0 to 11.0 % by weight, 2.5 to 4.0 % by weight, 3.0 to 3.5 % by weight, or 9.5 to 10.5 % by weight based on the total weight. If the NCO% of the adhesion promoter is less than the above range, there may be a problem that the storage stability is inferior. If the NCO% of the adhesion promoter exceeds the above range, there may be a problem that the adhesion property is inferior.

In addition, the adhesion promoter may have a viscosity of 3,000 to 10,000 cps, 3,000 to 5,000 cps, or 5,500 to 8,000 cps at 20 °C. If the viscosity of the adhesion promoter at 20 °C is less than the above range, there may be a problem that the adhesion property is inferior. If the viscosity of the adhesion promoter at 20 °C exceeds the above range, there may be a problem that the storage stability is inferior.

The adhesion promoter may have a weight average molecular weight (Mw) of 180 to 1,200 g/mol or 520 to 860 g/mol. If the weight average molecular weight of the adhesion promoter is less than the above range, there may be a problem that the adhesion property with the resin is inferior. If the weight average molecular weight of the adhesion promoter exceeds the above range, there may be a problem that the storage stability and the workability are inferior.

In addition, the adhesion promoter may be comprised in the composition in an amount of 1 to 10 parts by weight or 4 to 7 parts by weight based on 10 to 35 parts by weight of the first urethane-based prepolymer. If the content of the adhesion promoter is less than the above range, there may be a problem that the adhesion property is inferior. If the content of the adhesion promoter exceeds the above range, there may be a problem that the mechanical properties are inferior.

### Additive

The polyurethane composition according to the present invention may further include at least one additive selected from the group consisting of a fourth plasticizer, a pigment, and a catalyst. In this case, additives that can be commonly added to the urethane-based adhesive may be further included in addition to the additives described above.

The additive may be comprised in the composition in an amount of 20 to 55 parts by weight or 35 to 50 parts by weight based on 10 to 35 parts by weight of the first urethane-based prepolymer.

The fourth plasticizer plays a role of controlling the viscosity of the polyurethane composition and imparting flexibility to the cured product prepared therefrom. In this case, the fourth plasticizer may include a phthalate-based plasticizer. The phthalate-based plasticizer is not particularly limited as long as it can be used as a plasticizer for the urethane-based adhesive, and may be, for example, at least one selected from the group consisting of di-butyl phthalate, di-2-ethylhexyl phthalate, di-isononyl phthalate, di-isodecyl phthalate, and butylbenzyl phthalate.

The fourth plasticizer may be comprised in the composition in an amount of 5 to 30 parts by weight or 10 to 27 parts by weight based on 10 to 35 parts by weight of the first urethane-based prepolymer. If the content of the fourth plasticizer is less than the above range, there may be a problem that the workability is inferior. If the content exceeds the above range, there may be a problem that the workability and the adhesion property are inferior.

The pigment plays a role of imparting color to the composition and increasing mechanical properties such as hardness of the cured product prepared. In this case, the pigment may comprise at least one selected from the group consisting of carbon black, calcium carbonate, titanium dioxide, iron oxide, graphite, antimony-tin oxide, mica, carbon nanotubes, carbon fibers, barium sulfate, barytes, aluminum silicate, kaolin, kaolinite, magnesium silicate, talc, chlorite, tremolite, silica, quartz, bauxite, dolomite, feldspar, nepheline syenite, calcium silicate, wollastonite, zinc oxide, zinc phosphate, bismuth vanadate, zeolite and pyrophyllite. Specifically, the pigment may comprise carbon black and calcium carbonate.

The pigment may be comprised in the composition in an amount of 10 to 48 parts by weight or 15 to 35 parts by weight, based on 10 to 35 parts by weight of the first urethane-based prepolymer. For example, the composition may comprise 10 to 35 parts by weight or 15 to 30 parts by weight of carbon black, and 0.1 to 10 parts by weight or 1 to 5 parts by weight of calcium carbonate, based on 10 to 35 parts by weight of the first urethane-based prepolymer. If the content of the pigment is less than or exceeds the above range, the strength of the cured product prepared may be lowered, or it may be difficult to control the viscosity of the polyurethane composition and impart the required color to the coating film.

The catalyst plays a role of controlling the reactivity of the polyurethane composition. In this case, the catalyst is not particularly limited as long as it can be used for the conventional urethane-based adhesive, and may comprise, for example, at least one selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanediyl)bismorpholine, and dimethyl-4-morpholine ethanamine.

The catalyst may be comprised in the composition in an amount of 0.001 to 5 parts by weight or 0.01 to 2 parts by weight, based on 10 to 35 parts by weight of the first urethane-based prepolymer. If the content of the catalyst is less than the above range, there may be a problem that the shearing strength and the adhesion property of the prepared coating film are inferior. If the content of the catalyst exceeds the above range, there may be a problem that the storage stability and the working life of the composition are inferior.

As described above, the polyurethane composition according to the present invention has excellent adhesive property to the painted surface of the vehicle body and the ceramic glass surface, and thus the primer pre-treatment process can be omitted, and as described above, the economic efficiency is excellent due to the omission of the primer coating film process. In addition, the polyurethane composition has a suitable working life and thus an excellent workability, and has an effect that the mechanical properties of the prepared coating film are excellent.

Hereinafter, the present invention will be described in more detail through examples. However, these examples are only for helping the understanding of the present invention, and the scope of the present invention is not limited to these examples in any sense.

### [Example]

### Synthesis Example 1. Preparation of the first urethane-based prepolymer

A glass flask was connected to the hose of a vacuum pump, and was equipped with a stirrer, condenser, and thermometer. To the glass flask, 49 g of polypropylene glycol (Mw: 2,000 g/mol), 96 g of poly(propylene glycol) glycerol ether (Mw: 5,000 g/mol) and 52 g of diisononyl phthalate (DINP) were added. Thereafter, the temperature was slowly raised to 140 °C, and the reaction was conducted for 2 hours under a reduced pressure by vacuum, and then cooled to 60 °C, and 22 g of 1-isocyanato-4-[(4-isocyanatophenyl)methyl] benzene was added. After checking the exotherm, the content (NCO%) of unreacted NCO was measured every hour while maintaining the temperature at 85 °C, and when the measured NCO% was 1.70 to 1.75% by weight, it was cooled to 40 °C to obtain a first urethane-based prepolymer.

The prepared first urethane-based prepolymer had a viscosity of 8,400cps at 20°C, an NCO% of 1.72% by weight, and a weight average molecular weight of 9,000g/mol.

### Synthesis Example 2. Preparation of the second urethane-based prepolymer

A glass flask was connected to the hose of a vacuum pump, and was equipped with a stirrer, condenser, and thermometer. To the glass flask, 64 g of polypropylene glycol (Mw: 2,000 g/mol), 125 g of poly(propylene glycol) glycerol ether (Mw: 5,000 g/mol) and 69 g of diisononyl phthalate (DINP) were added. Thereafter, the temperature was slowly raised to 140 °C, and the reaction was conducted for 2 hours under a reduced pressure by vacuum, and then cooled to 60 °C, and 34 g of 1-isocyanato-4-[(4-isocyanatophenyl)methyl] benzene was added. After checking the exotherm, the content of unreacted NCO (NCO%) was measured every hour while maintaining the temperature at 85 °C, and when the measured NCO% was 1.9 to 2.0 % by weight, it was cooled to 40 °C. Thereafter, while maintaining the temperature at 40 °C, 9 g of bis(trialkoxysilylpropyl)amine was dropped into the silane coupling agent for 30 minutes, and the content of unreacted NCO (NCO%) was measured every hour. When the measured NCO% was 1.4 to 1.5% by weight, it was cooled to room temperature to obtain a second urethane-based prepolymer.

The prepared second urethane-based prepolymer had a viscosity of 7,500cps at 20 °C, an NCO% of 1.45% by weight, and a weight average molecular weight of 7,000g/mol.

### Synthesis Example 3. Preparation of adhesion promoter-1

A glass flask was connected to the hose of a vacuum pump, and was equipped with a stirrer, condenser, and thermometer. To the glass flask, 1,3,5-tris(6-hydroxyhexyl)biuret triisocyanate, diisononyl phthalate (DINP) and poly(propylene oxide) (polypropylene glycol 400) were added. Thereafter, while maintaining the temperature at 100 °C, the content of unreacted NCO (NCO%) was measured every hour, and when the measured NCO% reached 11.5 to 13.5% by weight, the temperature was cooled to 40 °C. Thereafter, while maintaining the temperature at 40 °C, 7 g of N-phenyl-gamma-aminopropyltrialkoxy silane was added, and the content of unreacted NCO (NCO%) was measured every hour. When the measured NCO% reached 9.0 to 11.0 % by weight, it was cooled to room temperature to obtain adhesion promoter-1. In this case, the content of each component was controlled as shown in Table 1.

The prepared adhesion promoter-1 had a viscosity of 6,800 cps at 20 °C and an NCO% of 10% by weight.

### Synthesis Example 4. Preparation of adhesion promoter-2

A glass flask was connected to the hose of a vacuum pump, and was equipped with a stirrer, condenser, and thermometer. To the glass flask, 1,3,5-tris(6-hydroxyhexyl)biuret triisocyanate, and diisononyl phthalate were added and stirred for 10 minutes. Thereafter, bis(trimethoxysilylpropyl)amine was dropped for 60 minutes while being careful not to exceed 50°C during 60 minutes. Thereafter, the content of unreacted NCO (NCO%) was measured every hour. When the measured NCO% reached 3.0 to 3.5% by weight, it was cooled to 40°C to obtain adhesion promoter-2. In this case, the content of each component was controlled as shown in Table 1.

The prepared adhesion promoter-2 had a viscosity of 4,000 cps at 20 °C and an NCO% of 3.1% by weight.

### Example 1. Preparation of polyurethane composition for adhesive

A vacuum pump made of stainless steel (SUS) was connected to a mixer with a jacket capable of high-viscosity rotary stirring and wall-scrubbing and heating. The first urethane-based prepolymer of Synthesis Example 1 and the second urethane-based prepolymer of Synthesis Example 2 were put into the mixer and heated to 60°C while stirring. Thereafter, carbon black and calcium carbonate as a pigment were added at 60°C, stirred for 20 minutes, and then the pressure was reduced in a vacuum of less than 20 Torr for 10 minutes to remove moisture. After releasing the vacuum, diisononyl phthalate as a plasticizer (fourth plasticizer), and dioctyltin dilaurate, dibutyltin mercaptide and 4,4'-(oxydi-2,1-ethanediyl)bismorpholine as a catalyst, and adhesion promoter-1 of Synthesis Example 3 or adhesion promoter-2 of Synthesis Example 4 were added and stirred for 30 minutes to obtain a polyurethane composition. In this case, the content of each component was controlled as shown in Table 1.

The prepared polyurethane composition had a viscosity of 19,000 Poise at 40 °C and an NCO% of 1.33% by weight.

### Examples 2 to 7 and Comparative Examples 1 to 9

First urethane prepolymers were prepared in the same manner as in Synthesis Example 1, except that the contents of the first polyol, the first plasticizer, and the first isocyanate compound are controlled, as shown in Tables 1 to 3.

In addition, second urethane prepolymers were prepared in the same manner as in Synthesis Example 2, except that the content of each component is controlled, as described in Tables 1 to 3.

In addition, adhesion promoters were prepared in the same way as in Synthesis Example 3 or 4, except that the content of each component is controlled, as described in Tables 1 to 3.

Thereafter, polyurethane compositions were prepared in the same manner as in Example 1, except that the contents of each component described in Tables 1 to 3.

**[Table 1]**

| Component (part by weight) | | | Exam ple 1 | Exam ple 2 | Exam ple 3 | Exam ple 4 | Exam ple 5 | Exam ple 6 |
|---|---|---|---|---|---|---|---|---|
| First urethane prepolymer | First polyol | Polypropyleneglycol (Mw:2000g/mol) | 49 | 49 | 49 | 49 | 49 | 49 |
| | | Polypropyleneglycol glycerol ether(Mw:5000g/mol) | 96 | 96 | 96 | 96 | 96 | 96 |
| | First plasticizer | Diisononyl phthalate | 52 | 52 | 52 | 52 | 52 | 52 |
| | First isocyanate | 1-isocyanato-4-[(4-isocyanatophenyl)me thyl] benzene | 22 | 22 | 22 | 22 | 22 | 22 |
| | Added amount | | 219 | 219 | 219 | 219 | 219 | 219 |
| Second urethane prepolymer | Second polyol | Polypropyleneglycol (Mw:2000g/mol) | 64 | 64 | 54 | 45 | 79 | 64 |
| | | Polypropyleneglycol glycerol ether(Mw:5000g/mol) | 125 | 125 | 104 | 87 | 154 | 125 |
| | Second plasticizer | Diisononyl phthalate | 69 | 69 | 57 | 49 | 85 | 69 |
| | Second isocyanate | 1-isocyanato-4-[(4-isocyanatophenyl)me thyl] benzene | 34 | 34 | 28 | 23 | 41 | 34 |
| | Silane coupling agent | Bis (trimethoxysilyl propyl)amine | 9 | 9 | 7 | 6 | 11 | 9 |
| | Added amount | | 301 | 301 | 250 | 210 | 370 | 301 |
| Pigment | carbon black | | 220 | 220 | 220 | 220 | 220 | 220 |
| | calcium carbonate | | 30 | 30 | 30 | 30 | 30 | 30 |
| | Total amount (added amount) | | 250 | 250 | 250 | 250 | 250 | 250 |
| Additive | Dioctyl tin dillaurate | | 0.03 | 0.03 | 0.03 | 0.03 | 0.03 | 0.03 |
| | (4,4' (oxlydi-2,1-ethanediyl)bismorpholine) | | 0.68 | 0.68 | 0.68 | 0.68 | 0.68 | 0.68 |
| | Dibutyl tin mercaptide | | 0.04 | 0.04 | 0.04 | 0.04 | 0.04 | 0.04 |
| | Fourth plasticizer | Diisononyl phthalate | 174. 25 | 174. 25 | 225. 25 | 265. 25 | 174. 25 | 164. 25 |
| | Total amount (added amount) | | 175. 00 | 175. 00 | 226. 00 | 266. 00 | 175. 00 | 165. 00 |
| Adhesion promoter | Third plasticizer | Diisononyl phthalate | 12 | 7 | 12 | 12 | 12 | 12 |
| | 1,3,5-Tris(6-hydroxyhexyl) biuret triisocyanate(biuret body) | | 30 | 20 | 30 | 30 | 30 | 37 |
| | diphenylmethane-4, 4'-diisocyanate | | - | - | - | - | - | - |
| | Polyol | Propylene Glycol 400 (Poly(propylene oxide) | 6 | - | 6 | 6 | 6 | 6 |
| | Silane compound containing amine group | Phenyl amino silane(N-phenyl-gamma-aminopropyl trimethoxy Silane) | 7 | - | 7 | 7 | 7 | 10 |
| | | Bis(trimethoxysilyl propyl)amine | - | 28 | - | - | - | - |
| | Total amount (added amount) | | 55 | 55 | 55 | 55 | 55 | 65 |
| Total amount (added amount) | | | 1000 | 1000 | 1000 | 1000 | 1000 | 1000 |

**[Table 2]**

| Component (part by weight) | | | Example 7 | Compara tive Example 1 | Compara tive Example 2 | Compara tive Example 3 | Compara tive Example 4 |
|---|---|---|---|---|---|---|---|
| First urethane prepolymer | First polyol | Polypropylene glycol(Mw:200 0g/mol) | 49 | 49 | 49 | 130 | - |
| | | Polypropylene glycol glycerol ether(Mw: 5000g/mol) | 96 | 96 | 96 | 198 | - |
| | First plasticizer | Diisononyl phthalate | 52 | 52 | 52 | 145 | - |
| | First isocyanate | 1-isocyanato-4-[(4-isocyanatophe nyl)methyl] benzene | 22 | 22 | 22 | 44 | - |
| | Added amount | | 219 | 219 | 219 | 517 | - |
| Second urethane prepolymer | Second polyol | Polypropylene glycol (Mw: 200 0g/mol) | 64 | 64 | 64 | - | 90 |
| | | Polypropylene glycol glycerol ehter(Mw:5000 g/mol) | 125 | 125 | 125 | - | 185 |
| | Second plasticizer | Diisononyl phthalate | 69 | 69 | 69 | - | 150 |
| | Second isocyanate | 1-isocyanato-4-[(4-isocyanatophe nyl)methyl] benzene | 34 | 34 | 34 | - | 65 |
| | Silane coupling agent | Bis(trimethox ysilylpropyl) amine | 9 | 9 | 9 | - | 17 |
| | Added amount | | 301 | 301 | 301 | - | 507 |
| Pigment | carbon black | | 220 | 230 | 220 | 220 | 230 |
| | calcium carbonate | | 30 | 30 | 30 | 30 | 30 |
| | Total amount (added amount) | | 250 | 260 | 250 | 250 | 260 |
| Additive | Dioctyl tin dillaurate | | 0.03 | 0.03 | 0.03 | 0.03 | 0.03 |
| | (4,4' (oxlydi-2,1-ethanediyl)bismorpholine) | | 0.68 | 0.68 | 0.68 | 0.68 | 0.68 |
| | Dibutyl tin mercaptide | | 0.04 | 0.04 | 0.04 | 0.04 | 0.04 |
| | Fourth plas ticizer | Diisononyl phthalate | 181.25 | 174.25 | 174.25 | 174.25 | 174.25 |
| | Total amount (added amount) | | 182.00 | 175.00 | 175.00 | 175.00 | 175.00 |
| Adhesion promoter | Third plasticizer | Diisononyl phthalate | 7 | 32 | 15 | 15 | 15 |
| | 1,3,5-Tris(6-hydroxyhexyl) biuret triisocyanate(biuret body) | | 15 | - | 34 | 30 | 30 |
| | diphenylmethane-4,4'-diisocyanate | | | | | | |
| | Polyol | Propylene Glycol 400(Poly(prop ylene oxide) | - | 6 | 6 | 6 | 6 |
| | Silane compound containing amine group | Phenyl amino silane (N-phenyl-gamma-aminopropyl | - | 7 | - | 7 | 7 |
| | | trimethoxy Silane | | | | | |
| | | Bis(trimethox ysilylpropyl) amine | 26 | - | - | - | - |
| | Total amount (added amount) | | 48 | 45 | 55 | 58 | 58 |
| Total amount (added amount) | | | 1000 | 1000 | 1000 | 1000 | 1000 |

**[Table 3]**

| Component (part by weight) | | | Compara tive Example 5 | Compara tive Example 6 | Compara tive Example 7 | Compara tive Example 8 | Compara tive Example 9 |
|---|---|---|---|---|---|---|---|
| First urethane prepolymer | First polyol | Polypropyleneg lycol(Mw:2000g /mol) | 49 | 49 | 49 | 49 | 49 |
| | | Polypropyleneg lycol glycerol ether(Mw: 5000g/mol) | 96 | 96 | 96 | 96 | 96 |
| | First plasticizer | Diisononyl phthalate | 52 | 52 | 52 | 52 | 52 |
| | First isocyanate | 1-isocyanato-4-[(4-isocyanatophen yl)methyl] benzene | 22 | 22 | 22 | 22 | 22 |
| | Added amount | | 219 | 219 | 219 | 219 | 219 |
| Second urethane prepolymer | Second polyol | Polypropyleneg lycol(Mw:2000g /mol) | 64 | 64 | 64 | 64 | 64 |
| | | Polypropyleneg lycol glycerol ehter(Mw:5000g /mol) | 125 | 125 | 125 | 125 | 125 |
| | Second plasticizer | Diisononyl phthalate | 69 | 69 | 69 | 69 | 69 |
| | Second isocyanate | 1-isocyanato-4-[(4-isocyanatophen yl)methyl] benzene | 34 | 34 | 34 | 34 | 34 |
| | Silane coupling agent | Bis(trimethoxy silylpropyl) am ine | 9 | 9 | 9 | 9 | 9 |
| | Added amount | | 301 | 301 | 301 | 301 | 301 |
| Pigment | carbon black | | 220 | 225 | 180 | 240 | 213 |
| | calcium carbonate | | 30 | 30 | 17 | 37 | 25 |
| | Total amount (added amount) | | 250 | 255 | 197 | 277 | 238 |
| Additive | Dioctyl tin dillaurate | | 0.03 | 0.03 | 0.03 | 0.03 | 0.03 |
| | (4,4' (oxlydi-2,1-ethanediyl)bismorpholine) | | 0.68 | 0.68 | 0.68 | 0.68 | 0.68 |
| | Dibutyl tin mercaptide | | 0.04 | 0.04 | 0.04 | 0.04 | 0.04 |
| | Fourth plas ticizer | Diisononyl phthalate | 174.25 | 174.25 | 174.25 | 174.25 | 174.25 |
| | Total amount (added amount) | | 175.00 | 175.00 | 175.00 | 175.00 | 175.00 |
| Adhesion promoter | Third plasticizer | Diisononyl phthalate | 12 | 12 | 12 | 7 | 7 |
| | 1,3,5-Tris(6-hydroxyhexyl)biuret triisocyanate(biuret body) | | - | 30 | 30 | 20 | 20 |
| | diphenylmethane-4,4'-diisocyanate | | 37 | - | - | - | - |
| | Polyol | Propylene Glycol 400(Poly(propy leneoxide) | 6 | 6 | 6 | - | - |
| | Silane compound containing amine group | Phenyl amino silane (N-phenyl-gamma-aminopropyl trimethoxy Silane | - | 2 | 60 | - | - |
| | | Bis(trimethoxy silylpropyl)am ine | - | - | - | 1 | 40 |
| | Total amount (added amount) | | 55 | 50 | 108 | 28 | 67 |
| Total amount (added amount) | | | 1000 | 1000 | 1000 | 1000 | 1000 |

### Test Example: Evaluation of physical property

The physical properties of the polyurethane compositions of the Examples and Comparative Examples were measured in the following manner, and the results are shown in Table 4 below.

### (1) Adhesion property (Knife Cut)

The composition was applied to the painted surface in a size of 120mm (length) × 10mm (width) × 5mm (thickness) and cured for 7 days under the conditions of a temperature of 20 °C and a relative humidity of 65% to form an adhesive layer. Thereafter, the adhesive layer at one end of the test piece was cut with a 15mm knife, and then the substrate of the painting was held with one hand and peeled off using a knife at an angle of 30°. After curing, adhesion properties were evaluated by calculating the remaining area of the unpeeled adhesive layer in % compared to the total area of the adhesive layer. At this time, it was evaluated that the higher the residual area, the better the adhesion property.

### (2) Shearing strength

The composition was applied and cured for 7 days under the conditions of a temperature of 20 °C and a relative humidity of 65% to prepare a dogbone-shaped specimen having a thickness of 5 mm, and then the shearing strength was measured with a Universal Testing Machine (UTM).

### Working life

After the composition was applied, and then, left at the conditions of a temperature of 35°C and a relative humidity of 90% at intervals of 4 minutes, 5 minutes, and 6 minutes, a specimen was prepared and the time at which no peeling occurred between the adhered surface and the interface was measured.

### Hardness

The composition was cured for 3 days under the conditions of a temperature of 20°C and a relative humidity of 65% to prepare a specimen having a thickness of 5 mm, and then the hardness was measured with a Shore A hardness tester.

### Shear modulus

After putting the composition in a 250mmX120mmX1.4mm (width X length X thickness) mold and curing at 175°C for about 3 hours, the shear modulus was measured at 25°C using PerkinELmer DMA 8000.

**[Table 4]**

| | Adhesion property (%) | Shearing strength (MPa) | Shear modulus (MPa) | Hardness (Shore A) | Working life (hr.) |
|---|---|---|---|---|---|
| Example 1 | 100 | 3.7 | 1.2 | 47 | 10 |
| Example 2 | 100 | 3.5 | 1.0 | 45 | 7 |
| Example 3 | 100 | 3.4 | 1.1 | 46 | 7 |
| Example 4 | 100 | 3.3 | 1.0 | 46 | 7 |
| Example 5 | 100 | 3.2 | 1.0 | 45 | 10 |
| Example 6 | 100 | 3.3 | 1.1 | 46 | 8 |
| Example 7 | 100 | 3.3 | 1.0 | 45 | 7 |
| Comparative Example 1 | 70 | 2.5 | 0.7 | 40 | 5 |
| Comparative Example 2 | 50 | 3.3 | 1.0 | 45 | 6 |
| Comparative Example 3 | 60 | 3.5 | 1.2 | 47 | 5 |
| Comparative Example 4 | 85 | 2.1 | 0.6 | 35 | 7 |
| Comparative Example 5 | 50 | 3.1 | 0.7 | 42 | 5 |
| Comparative Example 6 | 80 | 3.1 | 0.9 | 40 | 5 |
| Comparative Example 7 | 100 | 1.2 | 0.2 | 25 | 8 |
| Comparative Example 8 | 40 | 1.0 | 0.2 | 10 | 8 |
| Comparative Example 9 | 30 | 0.8 | 0.2 | 12 | 8 |

As shown in Table 4, it was found that the composition of the Example has a suitable working life and thus an excellent workability, and the coating film prepared therefrom is excellent in the adhesion property, the shearing strength, the shear modulus, and the hardness.

On the other hand, the composition of Comparative Example 1 containing an adhesion promoter prepared from a composition, which did not contain an isocyanate group-containing biuret body, had insufficient working life and thus insufficient workability, and the coating film prepared therefrom was insufficient in the adhesion property, the shearing strength, and the shear modulus.

In addition, the composition of Comparative Example 2 containing an adhesion promoter prepared from a composition which did not include a silane compound containing amine group, and the composition of Comparative Example 3, which did not contain the second urethane-based prepolymer, had insufficient working life and thus insufficient workability, and the coating film prepared therefrom was insufficient in the adhesion property.

Comparative Example 4, which did not contain the first urethane-based prepolymer, was insufficient in the adhesion property, the shearing strength, the shear modulus, and the hardness.

In addition, the composition of Comparative Example 5 containing an adhesion promoter prepared from an isocyanate-containing composition, not a biuret body, and the composition of Comparative Example 6 containing an adhesion promoter prepared from a composition containing a small amount of silane compound containing an amine group had insufficient working life and thus insufficient workability, and the coating film prepared therefrom was insufficient in the adhesion property and the shear modulus.

The coating films of Comparative Examples 7 and 9 containing an adhesion promoter prepared from a composition containing an excessive amount of silane compound containing an amine group, and the coating film of Comparative Example 8 containing an adhesion promoter prepared from a composition containing a small amount of silane compound containing an amine group had insufficient shearing strength, insufficient shear modulus, and insufficient hardness. In particular, the coating films of Comparative Examples 8 and 9 had insufficient adhesion properties.

## Claims

1. A polyurethane composition comprising a first urethane-based prepolymer, a second urethane-based prepolymer and an adhesion promoter,
wherein the first urethane-based prepolymer is prepared from a first polyol compound and a first isocyanate compound,
the second urethane-based prepolymer is prepared from a second polyol compound, a second isocyanate compound and a silane coupling agent, and
the adhesion promoter is prepared from a biuret body of an isocyanate, and a silane compound containing an amine group.

2. The polyurethane composition according to claim 1, wherein the silane coupling agent comprises at least one selected from the group consisting of bis(trialkoxysilylpropyl)amine, N-2-(aminoethyl)-3-aminopropylmethyldimethoxy silane, N-2-(aminoethyl)-3-aminopropyltrimethoxy silane, 3-aminopropyltrimethoxy silane, 3-aminopropyltriethoxy silane and N-phenyl-3-aminopropyltrimethoxy silane.

3. The polyurethane composition according to claim 1, wherein the first urethane-based prepolymer has an unreacted NCO content of 1.60 to 1.80% by weight, and the second urethane-based prepolymer has an unreacted NCO content of 1.30 to 1.60% by weight.

4. The polyurethane composition according to claim 1, wherein the silane compound containing an amine group is a silane compound containing a secondary amine group and an alkoxy group.

5. The polyurethane composition according to claim 1, wherein it comprises 10 to 35 parts by weight of the first urethane-based prepolymer, 20 to 40 parts by weight of the second urethane-based prepolymer, and 1 to 10 parts by weight of the adhesion promoter.
